# FASCICULE DE BREVET EUROPEEN

(11) **EP 0 531 291 B1**
(45) Date de publication et mention de la délivrance du brevet: **27.04.1994**
(21) Numéro de dépôt: 90915494.0
(22) Date de dépôt: 28.05.1990
(51) Int. Cl.: A61C 1/07

(54) **CONTRE-ANGLE D'ENDODONTIE**
ZAHNÄRTZLICHES HANDSTÜCK
CONTRA-ANGLE ATTACHMENT FOR OPERATIVE DENTISTRY

(43) Date de publication de la demande: 17.03.1993
(73) Titulaire: ANTHOGYR, F-74700 Sallanches (FR)
(72) Inventeur: LIETAER, Eric, F-74700 Sallanches (FR)
(74) Mandataire: Poncet, Jean-François
(86) Numéro de dépôt international: FR9000750
(87) Numéro de publication internationale: WO9118555

(56) Documents cités:
- EP-A- 0 161 196
- EP-A- 0 230 846
- FR-A- 2 178 349
- FR-A- 2 477 407

## Description

La présente invention concerne un appareil dentaire doté d'un organe d'entraînement pour instruments d'intervention endodontique, plus précisément d'un système mécanisé permettant la réalisation des différentes phases d'intervention, relatives aux traitements endodontiques.

Il est bien connu que ces différentes phases sont très délicates, en raison des formes très variées des canaux, en fonction des dents (canine, incisive, prémolaire et molaire).

Nous connaissons de nombreux appareils, relatifs aux brevets EP-A-0 230 846, EP-A-0 161 196, FR-A-2 178 349, pour la réalisation des divers traitements endodontiques, assurant des mouvements angulaires alternatifs, conjugués ou non, à des mouvements rectilignes longitudinaux, comportant différentes variantes sur les amplitudes de mouvements ou sur les degrés de liberté laissés à l'instrument en travail.

Ces appareils réalisent un amortissement incomplet et non progressif des mouvements de l'instrument, soit par un jeu permanent créé volontairement dans les moyens de transmission de mouvement, soit par un système de désaccouplement en cas de surcharge de l'instrument.

Un grand nombre de ces appareils engendrent les problèmes suivants :
- modification importante du tiers apical sur canaux courbes ;
- réalisation de faux canaux ;
- cassures fréquentes des instruments, suite à un coincement de ceux-ci.

Toutes les précédentes propositions ont tenté de remplacer les opérations manuelles par des systèmes mécanisés mais n'apportaient pas au praticien la sécurité suffisante et nécessaire à la réalisation des traitements endodontiques.

La présente invention apporte un "plus" à tous les appareils à mouvements conjugués, en supprimant les risques mentionnés ci-dessus. Elle concerne un dispositif, modifiant un mouvement hélicoïdal alternatif (ou autres mouvements), lors d'une surcharge sur l'instrument dans le canal, obligeant un traitement endodontique progressif, régulier et doux.

Pour cela, l'invention propose une tête de contre-angle comprenant :
- une tête,
- un arbre de transmission, monté à rotation dans la tête,
- un fourreau porte-instrument, tournant et coulissant dans la tête selon un mouvement d'axe II-II,
- un excentrique, en prise avec le fourreau porte-instrument, entraîné par l'arbre de transmission, et excentré par rapport à l'axe I-I de l'arbre de transmission ;
- un élément principal de transmission, entraîné en rotation par l'arbre de transmission, angulairement flexible par rapport à l'axe I-I de l'arbre de transmission, ayant à son extrémité l'excentrique, et placé entre le fourreau porte-instrument et l'arbre de transmission.

Le dispositif selon l'invention diminue progressivement les amplitudes de travail de l'instrument canalaire, en fonction des contraintes mécaniques qu'il subit. Lorsque l'effort sur l'instrument devient anormalement important, les amplitudes de travail de l'instrument changent progressivement, jusqu'à être complètement annulées. Les amplitudes de mouvements, transmises à l'instrument, sont donc amorties et transformées en mouvement vibratoire, favorisant ainsi le décoincement éventuel de l'instrument, tout en supprimant le risque de cassure. Cette transformation de mouvement, lors d'efforts trop importants sur l'instrument, permet d'assurer sans risque, la recherche canalaire, l'alésage canalaire et les autres opérations de la procédure endodontique.

Cette transformation du mouvement hélicoïdal alternatif est réalisée grâce à la flexibilité de l'élément principal de transmission des mouvements, placé entre le fourreau porte-instrument et l'arbre de transmission.

La présente invention se distingue par le fait que la sécurité du traitement canalaire est basée sur la flexion, la déformation progressive d'un élément principal de transmission des mouvements. Cet élément déformable est, pour ainsi dire :
- l'élément sensible qui détecte toute résistance anormale sur l'instrument ;
- l'élément intelligent de l'appareil qui va transformer le mouvement par sa déformation automatique, à partir d'une certaine somme d'efforts sur l'instrument.

Cette transformation de mouvement donne au traitement canalaire mécanisé une sécurité de travail comparable au traitement canalaire manuel.

La description qui suit, et les dessins en annexe, complètent et mettent en valeur l'originalité de l'invention, décrite ci-dessus, avec ses caractéristiques et ses avantages.

La figure 1 est une vue, en coupe axiale, de la tête, comportant le mécanisme de commande du mouvement hélicoïdal transformable.

La figure 2 est une vue de l'organe principal de transmission des mouvements, flexible sous un effort supérieur aux efforts normaux des travaux (exemple d'exécution nullement limitatif).

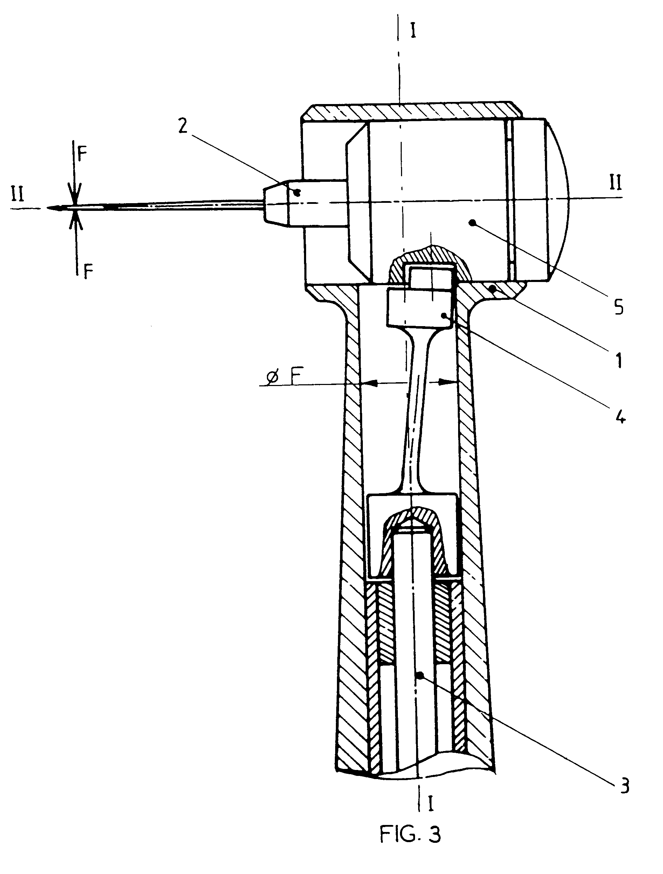

La figure 3 est une vue, en coupe axiale, de la tête , montrant la déformation de l'élément flexible en cas de surcharge sur l'instrument avec la limitation de la déformation angulaire.

Un tel mécanisme peut être logé dans une tête de contre-angle 1, comportant un système de verrouillage de l'instrument 2, qui peut être une guillotine, une poussette, une pince à poussoir...

Cette tête de contre-angle s'adapte sur un corps équipé ou non d'un mécanisme de réduction ou de multiplication quelconque. Ce corps permet l'accouplement de tout type avec un micromoteur électrique ou pneumatique, permettant ainsi l'entraînement en rotation d'un arbre de transmission 3.

A l'extrémité de l'arbre 3, est fixé un élément principal flexible 4 de transmission des mouvements, (diamètre ∅B monté "serré" sur l'arbre de transmission 3 et éventuellement goupillé).

Un fourreau porte-instrument 5 peut tourner et coulisser dans la tête 1 selon l'axe II-II de la tête 1.

L'élément principal de transmission 4 comprend une tige ∅A avec épaulement ∅C, et son extrémité comprend un excentrique ∅D présentant une excentration E par rapport à l'axe I-I de l'arbre de transmission 3, et en prise avec le fourreau porte-instrument 5.

Le fourreau porte-instrument 5 peut ainsi évoluer d'un mouvement hélicoïdal alternatif suivant l'axe II-II perpendiculaire à l'axe de rotation I-I de l'arbre de transmission 3. Le fourreau porte-instrument 5 cylindrique possède un trou ∅G cylindrique, perpendiculaire et centré à son axe de déplacement longitudinal II-II, dans lequel vient se loger l'extrémité de l'excentrique ∅D de l'élément principal de transmission 4.

La combinaison du fourreau porte-instrument 5 et de l'élément principal flexible de transmission 4 à excentrique, entraîné en rotation par l'arbre de transmission 3, constitue le mécanisme de transmission à un instrument 2, d'un mouvement hélicoïdal alternatif transformable et amorti.

L'élément principal de transmission 4 à excentrique possède la particularité d'être flexible angulairement par rapport à l'axe I-I de l'arbre de transmission 3, et d'être réalisé en un matériau à module d'élasticité approprié. La déformation angulaire est limitée par un épaulement ∅C sur la tige ∅A de l'élément principal de transmission. Cet épaulement ∅C peut venir buter sur le périmètre ∅F du corps de tête 1. Les matériaux pour le corps de tête 1, le fourreau 5 et l'élément principal de transmission 4 à excentrique, possèdent de très bonnes caractéristiques de frottement.

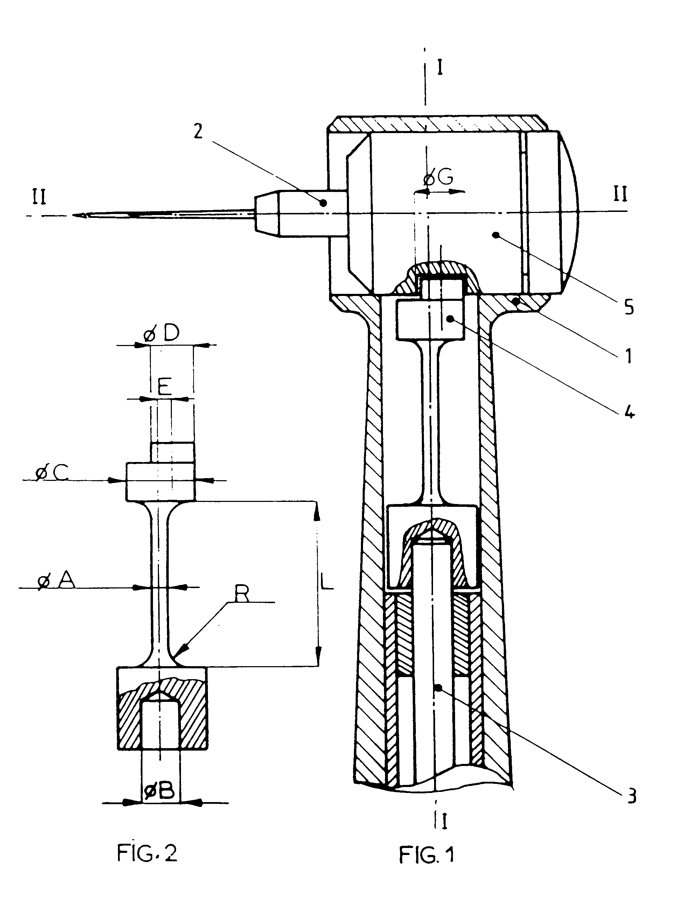

La figure 2 représente une possibilité de conception de l'élément principal de transmission 4 à excentrique ; la tige ∅A doit avoir une longueur L suffisamment importante, de façon à assurer la meilleure élasticité, convenant parfaitement aux efforts appliqués à l'instrument 2, de manière à obtenir une efficacité optimum des opérations du traitement canalaire.

L'élément principal de transmission 4 flexible à excentrique peut être monobloc ou en différentes pièces assemblées.

La matière utilisée possède un très bon module d'élasticité, correspondant à la sécurité recherchée, pour une efficacité optimum du traitement canalaire mécanisé. Les valeurs A, R et L varient en fonction du traitement thermique, de la nature du métal, alliage ou éventuellement plastique.

Le jeu entre le diamètre de l'excentrique ∅D et le diamètre du trou ∅G de fourreau porte-instrument 5 est nécessaire et fonctionnel.

La valeur de l'excentration E de l'excentrique ∅D par rapport à l'axe des diamètres B, A et C de l'élément principal de transmission flexible 4 définit l'amplitude des mouvements rectilignes et circulaires alternatifs. Le module d'élasticité de l'élément principal de transmission 4 à excentrique définit le seuil de transformation du mouvement et l'intensité du mouvement vibratoire.

Le mouvement hélicoïdal alternatif du fourreau porte-instrument 5 est transformable automatiquement, suivant l'effort F appliqué à l'instrument 2, en un mouvement vibratoire, dont la fréquence dépend de la vitesse de rotation du système d'entraînement et dont l'amplitude est pratiquement nulle lorsque la déformation angulaire de l'élément principal de transmission 4 est égale à la valeur de l'excentration E.

L'amplitude de ces mouvements longitudinaux et angulaires peut être ainsi complètement annulée lors d'une déformation par flexion angulaire de l'élément principal de transmission 4 à excentrique équivalente à l'excentration E.

L'appareil selon l'invention sécurise le traitement canalaire mécanisé en diminuant progressivement les amplitudes de travail de l'instrument 2 canalaire en fonction des contraintes.

Ainsi, les traitements endodontiques ne peuvent être réalisés que progressivement, sans que l'instrument 2 subisse des surcharges causées soit par le praticien soit par une résistance anormalement importante due à un obstacle dans le canal.

## Revendications

1. Tête de contre-angle pour instrument (2) endodontique, comprenant :
- une tête (1),
- un arbre de transmission (3), monté à rotation dans la tête (1),
- un fourreau porte-instrument (5), tournant et coulissant dans la tête (1) selon un mouvement d'axe II-II,
- un excentrique (∅D), en prise avec le fourreau porte-instrument (5), entraîné par l'arbre de transmission (3), et excentré par rapport à l'axe I-I de l'arbre de transmission (3),
caractérisée en ce qu'elle comprend :
- un élément principal de transmission (4), entraîné en rotation par l'arbre de transmission (3), angulairement flexible par rapport à l'axe I-I de l'arbre de transmission (3), ayant à son extrémité l'excentrique (∅D), et placé entre le fourreau porte-instrument (5) et l'arbre de transmission (3).

2. Tête de contre-angle selon la revendication 1, caractérisée en ce que l'élément principal de transmission (4) est réalisé en une matière possédant un module d'élasticité.

3. Tête de contre-angle selon la revendication 2, caractérisée en ce que le module d'élasticité de la matière constituant l'élément principal de transmission (4) est tel que l'élément principal de transmission (4) fléchit sous un effort supérieur aux efforts normaux des travaux.

4. Tête de contre-angle selon l'une quelconque des revendications 1 à 3, caractérisée en ce que l'élément principal de transmission (4) comprend une tige (∅A) avec épaulement (∅C).

5. Tête de contre-angle selon l'une quelconque des revendications 1 à 4, caractérisée en ce que l'organe de transmission (4) peut venir buter sur le périmètre (∅F) du corps de tête (1) pour limiter la flexion angulaire de l'élément principal de transmission (4).

6. Tête de contre-angle selon l'une quelconque des revendications 1 à 5, caractérisée en ce que le fourreau porte-instrument (5) possède un trou (∅G) dans lequel vient se loger l'extrémité de l'excentrique (∅D) de l'élément principal de transmission (4).

7. Tête de contre-angle selon la revendication 6, caractérisée en ce que le trou (∅G) est cylindrique.

8. Tête de contre-angle selon la revendication 7, caractérisée en ce qu'un jeu fonctionnel est prévu entre l'excentrique (∅D) et le trou (∅G) du fourreau porte-instrument (5).

9. Tête de contre-angle selon l'une quelconque des revendications 1 à 8, caractérisée en ce que l'élément principal de transmission (4) est monobloc et solidaire de l'arbre de transmission (3).

10. Tête de contre-angle selon l'une quelconque des revendications 1 à 9, caractérisée en ce que l'élément principal de transmission (4) est fixé à l'extrémité de l'arbre de transmission (3) par un diamètre (∅B) monté serré sur l'arbre (3) et éventuellement goupillé.

## Claims

1. Angle-piece head for endodontal instrument (2) comprising:
- a head (1),
- a transmission shaft (3) mounted so that it rotates in the head (1),
- an instrument holder sleeve (5) that rotates and slides in head (1) by moving along axis II-II,
- a cam (φD) that engages with instrument holder sleeve (5) which is driven by transmission shaft (3) and off centred with respect to axis I-I of transmission shaft (3), characterised in that it comprises:
- a main transmission element (4) that is rotated by transmission shaft (3) and is angularly flexible with respect to axis I-I of transmission shaft (3) having, at its end, cam (φD) and being positioned between instrument holder sleeve (5) and transmission shaft (3).

2. Angle-piece head as claimed in claim 1 characterised in that the main transmission element (4) is made of a material having a modulus of elasticity.

3. Angle-piece head as claimed in claim 2 characterised in that the modulus of elasticity of the material of which main transmission element (4) is made is such that the main transmission element (4) bends when subjected to a force that exceeds the normal working force.

4. Angle-piece head as claimed in any of claim 1 to 3 characterised in that the main transmission element (4) consists of a rod (φA) with a shoulder (φC).

5. Angle-piece head as claimed in any of claim 1 to 4 characterised in that the transmission unit (4) may rest against the perimeter (φF) of the case of head (1) in order to limit the angular bending of main transmission element (4).

6. Angle-piece head as claimed in any of claims 1 to 5 characterised in that instrument holder sleeve (5) has a hole (φG) in which the end of cam (φD) of main transmission element (4) fits.

7. Angle-piece head as claimed in claim 6 characterised in that the hole (φG) is cylindrical.

8. Angle-piece head as claimed in claim 7 characterised in that functional backlash is provided between cam (φD) and hole (φG) in instrument holder sleeve (5).

9. Angle-piece head as claimed in any of claims 1 to 8 characterised in that main transmission element (4) is a single-piece unit and is joined to transmission shaft (3).

10. Angle-piece head as claimed in any of claims 1 to 9 characterised in that main transmission element (4) is attached at the end of transmission shaft (3) by a diameter (φB) clamped onto shaft (3) and pin fastened if applicable.

## Patentansprüche

1. Gegenwinkelkopf für ein endodontisches Instrument (2), bestehend aus:
- einem Kopf (1),
- einer Transmissionswelle (3), die in dem Kopf (1) drehbar gelagert ist,
- einer Instrumenten-Traghülse (5), die in dem Kopf (1) dreht und gemäß einer Bewegungsachse II-II gleitet,
- einem Exzenter (∅D), der mit der Instrumenten-Traghülse (5) im Eingriff ist, von der Transmissionswelle (3) mitgenommen wird und in Bezug auf die Achse I-I der Transmissionswelle (3) exzentrisch ist,
dadurch gekennzeichnet, daß er besteht aus:
- einem Transmissions-Hauptelement (4), welches für eine Drehung durch die Transmissionswelle (3) mitgenommen wird, winkelmäßig flexibel ist in Bezug auf die Achse I-I der Transmissionswelle (3), an seinem Ende den Exzenter (∅D) aufweist und zwischen der Instrumenten-Traghülse (5) und der Transmissionswelle (3) angeordnet ist.

2. Gegenwinkelkopf nach Anspruch 1, dadurch gekennzeichnet, daß das Transmissions-Hauptelement (4) aus einem Material mit einem Elastizitätsmodul hergestellt ist.

3. Gegenwinkelkopf nach Anspruch 2, dadurch gekennzeichnet, daß der Elastizitätsmodul des Materials, welches das Transmissions-Hauptelement (4) ausbildet, derart ist, daß sich das Transmissions-Hauptelement (4) unter einer Kraft größer als die normalen Arbeitskräfte biegt.

4. Gegenwinkelkopf nach einem der Ansprüche 1 bis 3, dadurch gekennzeichnet, daß das Transmissions-Hauptelement (4) einen Schaft (∅A) mit einer Schulter (∅C) aufweist.

5. Gegenwinkelkopf nach einem der Ansprüche 1 bis 4, dadurch gekennzeichnet, daß das Transmissinselement (4) an dem Umfang (∅F) des Körpers des Kopfes (1) anstoßen kann, um die winkelmäßige Biegung des Transmissions-Hauptelements (4) zu begrenzen.

6. Gegenwinkelkopf nach einem der Ansprüche 1 bis 5, dadurch gekennzeichnet, daß die Instrumenten-Traghülse (5) ein Loch (∅G) aufweist, in welchen sich das Ende des Exzenters (∅D) des Transmissions-Hauptelements (4) lagern kann.

7. Gegenwinkelkopf nach Anspruch 6, dadurch gekennzeichnet, daß das Loch (∅G) zylindrisch ist.

8. Gegenwinkelkopf nach Anspruch 7, dadurch gekennzeichnet, daß ein funktionelles Spiel zwischen dem Exzenter (∅D) und dem Loch (∅G) der Instrumenten-Traghülse (5) vorgesehen ist.

9. Gegenwinkelkopf nach einem der Ansprüche 1 bis 8, dadurch gekennzeichnet, daß das Transmissions-Hauptelement (4) mit der Transmissionswelle (3) ein geschlossenes Ganzes bildet und damit einstückig ist.

10. Gegenwinkelkopf nach einem der Ansprüche 1 bis 9, dadurch gekennzeichnet, daß das Transmissions-Hauptelement (4) an dem Ende der Transmissionswelle (3) durch einen Durchmesser (∅B) befestigt ist, der auf der Welle (3) aufgezogen montiert und evtl. verstiftet ist.
